# EUROPEAN PATENT APPLICATION

(11) **EP 4 280 302 A1**
(43) Date of publication of application: **22.11.2023**
(21) Application number: 22924599.8
(22) Date of filing: 08.04.2022
(51) Int. Cl.: H01M 4/505, H01M 10/0568

(54) **SECONDARY BATTERY, PREPARATION METHOD FOR CORRESPONDING POSITIVE ELECTRODE ACTIVE MATERIAL, BATTERY MODULE, BATTERY PACK AND ELECTRIC DEVICE**

(71) Applicant: Contemporary Amperex Technology Co., Limited, Ningde, Fujian 352100 (CN)
(72) Inventor: LI, Zhenhua, Ningde City, Fujian 352100 (CN); XU, Jiawei, Ningde City, Fujian 352100 (CN); FU, Hanli, Ningde City, Fujian 352100 (CN); WU, Xiayi, Ningde City, Fujian 352100 (CN); LI, Xing, Ningde City, Fujian 352100 (CN); NIU, Shaojun, Ningde City, Fujian 352100 (CN); JIN, Haizu, Ningde City, Fujian 352100 (CN)
(74) Representative: Gong, Jinping
(86) International application number: PCT/CN2022/085791
(87) International publication number: WO 2023/193231

(57) **Abstract**

The present application relates to a secondary battery, comprising (1) a positive electrode plate; and (2) an electrolyte solution; wherein a positive electrode active material is an active material having a chemical formula of AₓB₁₋ₓMeO₂ or AₓB₁₋ₓMPO₄ with dications A and B, where Me, M, A, B, and x are as defined in the specification; and the electrolyte solution comprises an electrolyte salt of the dications A and B, where A and B are as defined in the positive electrode active material; as well as a method for preparing a corresponding positive electrode active material, a corresponding battery module, a battery pack, and an electrical apparatus. The secondary battery of the present application comprises a positive electrode active material comprising the dications A and B and an electrolyte solution of a salt of the same dications, which improves the stability of the positive electrode active material and the negative electrode active material, thereby improving the cycling stability of the battery.

## Description

### TECHNICAL FIELD

The present application relates to the technical field of secondary batteries, and in particular to a secondary battery, a method for preparing a corresponding positive electrode active material, a battery module, a battery pack, and an electrical apparatus.

### BACKGROUND ART

In recent years, secondary batteries are widely applied in energy storage power systems, such as water, fire, wind, and solar power stations, as well as many fields, such as electric tools, electric bicycles, electric motorcycles, electric vehicles, military equipment, and aerospace. Due to great development of the secondary batteries, especially lithium-ion batteries, higher requirements are put forward for energy density, cycling performance, and safety performance thereof. In addition, because selection of a positive electrode active material is increasingly limited, adjusting the structure of the positive electrode active material is increasingly studied by those skilled in the art.

At present, it is an effective means to improve rate performance, cycling performance and the like of a material by, e.g., cladding or doping. However, all existing methods will lead to different degrees of damage to battery performance, for example, gram capacity reduction or cycling performance deterioration of batteries. Therefore, existing cladded or doped positive electrode active materials still remain to be improved.

### SUMMARY OF THE INVENTION

In view of the above issues, an object of the present application is to provide a secondary battery, comprising a positive electrode active material that comprises dications A and B and an electrolyte solution of a salt of the same dications, thereby improving stability of the positive electrode active material and a negative electrode active material, and improving cycling stability of the battery.

A first aspect of the present application provides a secondary battery, comprising (1) a positive electrode plate that comprises a positive electrode current collector and a positive electrode film layer arranged on at least one surface of the positive electrode current collector and comprising a positive electrode active material; and (2) an electrolyte solution; where the positive electrode active material is an active material having a chemical formula below with dications A and B

AₓB₁₋ₓMeO₂ or AₓB₁₋ₓMPO₄,

where
Me is selected from one or more of elements Mn, Fe, Ni, Co, V, Cu, or Cr;
M is selected from one or more of Mn, Fe, Ni, or Co;
A is K or Na,
B is Na or Li;
where an ionic radius of A is larger than that of B, and A and B are of different classes;
x is from 0.001 to 0.05; and
the electrolyte solution comprises an electrolyte salt of the dications A and B, where A and B are as defined in the positive electrode active material.

Therefore, the battery of the present application comprises a positive electrode active material comprising the dications A and B and the electrolyte solution of the salt of the same dications, thereby advantageously greatly improving the cycling performance thereof. On the one hand, the cation A with a larger radius plays a role in stabilizing the structure of the positive electrode active material, and reducing the loss of the positive electrode active material. On the other hand, the cation A with the larger radius is intercalated into the negative electrode active material through the electrolyte solution comprising a salt of the ion, to support the structure of the negative electrode active material, and reduce the loss of active lithium ions, thereby improving the cycling performance of the battery.

In any of embodiments, a molar concentration ratio of the two cations in the electrolyte solution is greater than or equal to a stoichiometric ratio of the two cations in the positive electrode active material, thereby contributing more to the stability of the negative electrode active material, and improving the cycling stability of the battery.

In any of embodiments, the electrolyte salt of the dications is selected from at least one of an inorganic salt and an organic salt of two or more elements of lithium, sodium, and potassium, where the inorganic salt is selected from at least one of hexafluorophosphate, perchlorate, hexafluoroarsenate, tetrafluoroborate, or difluorophosphate; and the organic salt is selected from at least one of bis(oxalate)borate salt, difluoro(oxalato)borate salt, bis(fluorosulfonyl)imide salt, or bis(trifluoromethanesulfonyl)imide salt, such that the electrolyte solution is more conducive to the transmission of the dications, thereby improving the cycling stability of the battery.

In any of embodiments, the positive electrode active material having the chemical formula of AₓB₁₋ₓMeO₂ is selected from at least one of an active material having a chemical formula of AₓB₁₋ₓNiO₂, AₓB₁₋ₓMnO₂, AₓB₁₋ₓCoO₂, AₓB₁₋ₓNi_{y}Co_{z}Mn_{1-y-z}O₂, or AₓB₁₋ₓNi_{y}Co_{z}Al_{1-y-z}O₂, a cladded product and a doped product thereof; where the A, B, and x are as defined above; 0≤z≤1, and 0≤y≤1, thereby improving the cycling stability of the secondary battery by including the specific positive electrode active material.

In any of embodiments, the positive electrode active material having the chemical formula of AₓB₁₋ₓMPO₄ is selected from at least one active material having a chemical formula of AₓB₁₋ₓFePO₄ or AₓB₁₋ₓCoPO₄; where the A, B, and x are as defined above, thereby improving the cycling stability of the secondary battery by including the specific positive electrode active material.

A second aspect of the present application further provides a method for preparing a positive electrode active material for the secondary battery according to the first aspect, including steps of:
1) providing a precursor of a transition metal Me or M; and
2) fully mixing the precursor with a salt of a metal A or a salt of a metal B, grinding the mixture;
then calcinating the ground powder, and then cooling to room temperature to obtain the positive electrode active material;
where the Me or M, A, and B are as defined in the first aspect of the present application.

Therefore, the positive electrode active material required by the battery in the first aspect of the present application can be prepared, and the structural stability of the positive electrode active material can be improved, thereby improving the cycling stability of the secondary battery.

In any of embodiments, the salt of the metal A or the salt of the metal B is at least one of carbonate or hydroxide. Therefore, the active material of the present application can be obtained from the metal salt of said type, so as to improve the cycling stability of the secondary battery.

In any of embodiments, a molar ratio of the precursor to the salt of the metal A or the salt of the metal B is 105%-109% of a stoichiometric ratio thereof. Therefore, the active material of the present application can be obtained from the precursor and the salt of the metal A or the salt of the metal B at said ratio, so as to improve the cycling stability of the secondary battery.

A third aspect of the present application provides a battery module, comprising the secondary battery in the first aspect of the present application.

A fourth aspect of the present application provides a battery pack, comprising the battery module in the third aspect of the present application.

A fifth aspect of the present application provides an electrical apparatus, comprising at least one selected from the secondary battery in the first aspect of the present application, the battery module in the third aspect of the present application, or the battery pack in the fourth aspect of the present application.

The battery in the present application comprises a positive electrode active material comprising dications A and B and an electrolyte solution of a salt of the same dications, thereby advantageously greatly improving the cycling performance thereof. On the one hand, the cation A with a larger radius plays a role in stabilizing the structure of the positive electrode active material, and reducing the loss of the positive electrode active material. On the other hand, the dications A and B of the dicationic positive electrode active material can be intercalated into the negative electrode active material through the electrolyte solution of the salt of the dications, where the cation A with a larger ionic radius plays a supporting role in the negative electrode active material, thereby reducing the expansion/contraction of the negative electrode active material caused by the ion B with a smaller ionic radius in the intercalation/deintercalation process, contributing to improving the stability of the SEI (solid electrolyte interphase), reducing the consumption of active lithium ions, and improving the cycling stability of the battery.

### DESCRIPTION OF DRAWINGS

Fig. 1 is a schematic view of a secondary battery according to an embodiment of the present application.
Fig. 2 is an exploded view of the secondary battery according to an embodiment of the present application shown in Fig. 1.
Fig. 3 is a schematic diagram of a battery module according to an embodiment of the present application.
Fig. 4 is a schematic view of a battery pack according to an embodiment of the present application.
Fig. 5 is an exploded view of the battery pack according to an embodiment of the present application shown in Fig. 4.
Fig. 6 is a schematic view of an electrical apparatus in which a secondary battery is used as a power source according to an embodiment of the present application.

Description of reference numerals:
1 battery pack; 2 upper box body; 3 lower box body; 4 battery module; 5 secondary battery; 51 case; 52 electrode assembly; 53 top cover assembly

### DETAILED DESCRIPTION

Embodiments of a secondary battery, a method for preparing a corresponding positive electrode active material, a positive electrode plate, a battery module, a battery pack, and an electrical apparatus in the present application are specifically disclosed in detail below appropriately with reference to the detailed description of the drawings. However, there will be cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), showing that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specified, the terms "include/including" and "comprise/comprising" mentioned in the present application may be open-ended or closed-ended. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied under any one of the following conditions: A is true (or present) and B is false (or absent); A is false (or absent) and B is true (or present); or both A and B are true (or present).

Because selection of a positive electrode active material is increasingly limited, adjusting the structure of the positive electrode active material is increasingly studied by those skilled in the art. At present, it is an effective means to improve rate performance, cycling performance and the like of a material by, e.g., cladding or doping. However, all existing methods will lead to different degrees of damage to battery performance, for example, gram capacity reduction or cycling performance deterioration of batteries. Therefore, existing cladded or doped positive electrode active materials still remain to be improved. The inventors found through researches that the secondary battery in the first aspect of the present application uses a positive electrode active material comprising a cation with a larger radius in combination with an electrolyte solution comprising a salt of the ion, thereby advantageously greatly improving the cycling performance thereof. On the one hand, the cation with the larger radius plays a role in stabilizing the structure of the positive electrode active material, and reducing the loss of the positive electrode active material. On the other hand, the cation with the larger radius is intercalated into the negative electrode active material through the electrolyte solution comprising a salt of the ion, to support the structure of the negative electrode active material, and reduce the loss of active lithium ions, thus improving the cycling performance of the battery.

### Secondary battery

In an embodiment of the present application, the present application presents a secondary battery, comprising (1) a positive electrode plate that comprises a positive electrode current collector and a positive electrode film layer arranged on at least one surface of the positive electrode current collector and comprising a positive electrode active material; and (2) an electrolyte solution; where the positive electrode active material is an active material having a chemical formula below with dications A and B

AₓB₁₋ₓMeO₂ or AₓB₁₋ₓMPO₄,

where
Me is selected from one or more of elements Mn, Fe, Ni, Co, V, Cu, or Cr;
M is selected from one or more of Mn, Fe, Ni, or Co;
A is K or Na,
B is Na or Li;
where an ionic radius of A is larger than that of B, and A and B are of different categories;
x is from 0.001 to 0.05; and is preferably from 0.001 to 0.025; and
the electrolyte solution comprises an electrolyte salt of the dications A and B, where A and B are as defined in the positive electrode active material.

Without being limited to any theory, the present application unexpectedly found that the battery of the present application comprises a positive electrode active material comprising dications A and B and an electrolyte solution of a salt of the same dications, thereby advantageously greatly improving the cycling performance thereof. On the one hand, the cation A with a larger radius plays a role in stabilizing the structure of the positive electrode active material, and reducing the loss of the positive electrode active material. On the other hand, the cation A with the larger radius is intercalated into the negative electrode active material through the electrolyte solution comprising a salt of the ion, to support the structure of the negative electrode active material, and reduce the loss of active lithium, thus improving the cycling performance of the battery.

In some embodiments, a cation of the electrolyte salt of the dications is same as a cation of the positive electrode active material; and a molar concentration ratio of the two cations in the electrolyte solution is greater than or equal to a stoichiometric ratio of the two cations in the positive electrode active material, thereby contributing more to the stability of the negative electrode active material, and improving the cycling stability of the battery.

In some embodiments, the electrolyte salt of the dications means that the electrolyte salt used in the electrolyte solution comprises same two cations as in the positive electrode active material, i.e., a mixture of the salt of the cations A and B.

In some embodiments, the electrolyte salt of the dications is selected from at least one of an inorganic salt and an organic salt of two or more elements of lithium, sodium, and potassium, where the inorganic salt is selected from at least one of hexafluorophosphate, perchlorate, hexafluoroarsenate, tetrafluoroborate, or difluorophosphate, and is optionally hexafluorophosphate; and the organic salt is selected from at least one of bis(oxalate)borate salt, difluoro(oxalato)borate salt, bis(fluorosulfonyl)imide salt, or bis(trifluoromethanesulfonyl)imide salt, such that the electrolyte solution is more conducive to the transmission of the dications, thereby improving the cycling stability of the battery.

In some embodiments, the positive electrode active material having the chemical formula of AₓB₁₋ₓMeO₂ is selected from at least one of an active material having a chemical formula of AₓB₁₋ₓNiO₂, AₓB₁₋ₓMnO₂, AₓB₁₋ₓCoO₂, AₓB₁₋ₓNi_{y}Co_{z}Mn_{1-y-z}O₂, or AₓB₁₋ₓNi_{y}Co_{z}Al_{1-y-z}O₂, and a cladded product and a doped product thereof, where the A, B, and x are as defined above; 0≤z≤1, and 0≤y≤1; and is optionally an active material having a chemical formula of AₓB₁₋ₓNi_{y}Co_{z}Mn_{1-y-z}C₂, where the A, B, and x are as defined above, y=0.5, and z=0.2. thereby improving the cycling stability of the secondary battery by including the specific positive electrode active material.

In some embodiments, the positive electrode active material having the chemical formula of AₓB₁₋ₓMPO₄ is selected from at least one active material having a chemical formula of AₓB₁₋ₓFePO₄ or AₓB₁₋ₓCoPO₄, and a cladded product and a doped product thereof, where the A, B, and x are as defined above; and is optionally an active material having a chemical formula of AₓB₁₋ₓFePO₄, where the A, B, and x are as defined above. thereby improving the cycling stability of the secondary battery by including the specific positive electrode active material.

A second aspect of the present application further provides a method for preparing a positive electrode active material for the secondary battery according to the first aspect of the present application, including steps of:
1) providing a precursor of a transition metal Me or M; and
2) fully mixing the precursor with a salt of a metal A or a salt of a metal B, grinding the mixture;
then calcinating the ground powder, and then cooling to room temperature to obtain the positive electrode active material;
where the Me or M, A, and B are as defined in the first aspect of the present application.

Therefore, the positive electrode active material required by the battery in the first aspect of the present application can be prepared, and the structural stability of the positive electrode active material can be improved, thereby improving the cycling stability of the secondary battery.

In some embodiments, the precursor of the transition metal Me or M Me may be commercially available or may be prepared according to a method known to those skilled in the art.

In some embodiments, the salt of the metal A or the salt of the metal B is at least one of carbonate or hydroxide, and is optionally carbonate. Therefore, the active material of the present application can be obtained from the metal salt of said type, so as to improve the cycling stability of the secondary battery.

In some embodiments, a molar ratio of the precursor to the salt of the metal A or the salt of the metal B is 105%-109% of a stoichiometric ratio thereof. Therefore, the active material of the present application can be obtained from the precursor and the salt of the metal A or the salt of the metal B at said ratio, so as to improve the cycling stability of the secondary battery.

In some embodiments, in step 2), the calcination is generally carried out in a high-temperature furnace, including first pre-calcination at a low temperature of 300-600 °C for 3-7 h, and then calcination at a high temperature of 700-900 °C for 9-15 h.

In some embodiments, the secondary battery comprises (1) a negative electrode plate that comprises a negative electrode current collector and a negative electrode film layer arranged on at least one surface of the negative electrode current collector and comprising a negative electrode active material; (2) a positive electrode plate that comprises a positive electrode current collector and a positive electrode film layer arranged on at least one surface of the positive electrode current collector and comprising a positive electrode active material; and (3) an electrolyte solution; where the positive electrode active material and the electrolyte solution are as defined above.

In general, the secondary battery comprises a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is provided between the positive electrode plate and the negative electrode plate, and mainly functions to prevent a short circuit between the positive electrode and the negative electrode while allowing ions to pass through.

### [Positive electrode plate]

The positive electrode plate comprises a positive electrode current collector and a positive electrode film layer arranged on at least one surface of the positive electrode current collector, and the positive electrode film layer comprises the positive electrode active material as mentioned above.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector can comprise a high molecular material substrate layer and a metal layer formed on at least one surface of the high molecular material substrate layer. The composite current collector may be formed by forming a metal material (such as aluminum, aluminum alloy, nickel, nickel alloy, titanium, titanium alloy, silver, and silver alloy) on a substrate of a high molecular material (such as a substrate of polypropylene (PP), polyethylene terephthalate (PET), polybutylene terephthalate (PBT), polystyrene (PS), or polyethylene (PE)).

In some embodiments, the positive electrode active material is the positive electrode active material comprising the dications A and B as mentioned above.

The method for preparing a positive electrode active material is as described in the second aspect of the present application.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may comprise at least one of superconducting carbon, acetylene black, carbon black, Ketjen black, carbon dot, carbon nanotube, graphene, and carbon nanofiber.

In some embodiments, the positive electrode plate may be prepared as follows: the above components, such as the positive electrode active material, the conductive agent, the binder, and any other components, for preparing the positive electrode plate are dispersed in a solvent (such as N-methylpyrrolidone) to form a positive electrode slurry; and the positive electrode slurry is coated on the positive electrode current collector, oven-dried, and cold pressed, to obtain the positive electrode plate.

### [Negative electrode plate]

The negative electrode plate comprises a negative electrode current collector and a negative electrode film layer arranged on at least one surface of the negative electrode current collector, and the negative electrode film layer comprises a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector can be a metal foil or a composite current collector. For example, a copper foil can be used as the metal foil. The composite current collector may comprise a high molecular material substrate layer and a metal layer formed on at least one surface of a high molecular material substrate. The composite current collector may be formed by forming a metal material (such as copper, copper alloy, nickel, nickel alloy, titanium, titanium alloy, silver, and silver alloy) on a substrate of a high molecular material (such as a substrate of polypropylene (PP), polyethylene terephthalate (PET), polybutylene terephthalate (PBT), polystyrene (PS), or polyethylene (PE)).

In some embodiments, a negative electrode active material for a battery well-known in the art may be used as the negative electrode active material. As an example, the negative electrode active material may include at least one of the following materials: artificial graphite, natural graphite, soft carbon, hard carbon, silicon-based material, tin-based material, lithium titanate, and the like, and is optionally artificial graphite or natural graphite. The silicon-based material may be at least one selected from the group consisting of elementary silicon, silicon-oxygen compound, silicon-carbon composite, silicon-nitrogen composite, and silicon alloy. The tin-based material may be at least one selected from the group consisting of elementary tin, tin-oxygen compound, and tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate may be prepared as follows: the above components, such as the negative electrode active material, the conductive agent, the binder, and any other components, for preparing the negative electrode plate are dispersed in a solvent (such as deionized water) to form a negative electrode slurry; and the negative electrode slurry is coated on the negative electrode current collector, oven-dried, and cold pressed, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt is the electrolyte salt of the dications according to the first aspect of the present application.

In some embodiments, the solvent may be selected from at least one of ethylene carbonate (EC), propylene carbonate, ethyl methyl carbonate (EMC), diethyl carbonate, dimethyl carbonate (DMC), dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methyl sulfone, and ethylsulfonylethane.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery further comprises a separator. The type of the separator is not particularly limited in the present application, and any well-known separator with a porous structure having good chemical stability and mechanical stability may be selected.

In some embodiments, the material of the separator may be selected from at least one of glass fiber, non-woven cloth, polyethylene, polypropylene, and polyvinylidene fluoride. The separator may be a single-layer film or a multi-layer composite film, and is not particularly limited. When the separator is a multilayer composite film, the material in each layer may be identical or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above-mentioned electrode assembly and electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft pack may be a plastic, and examples of the plastic include polypropylene, polybutylene terephthalate and polybutylene succinate, etc.

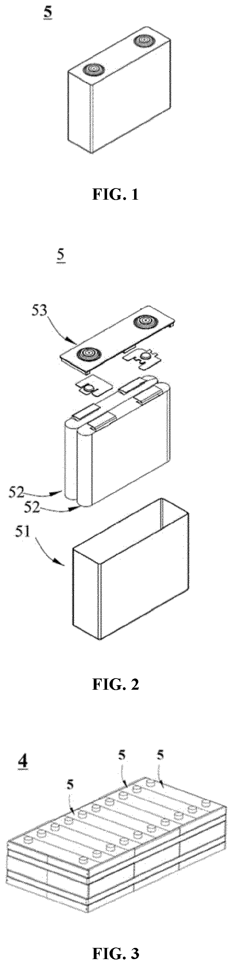

The shape of the secondary battery is not particularly limited in the present application, and may be a cylinder, a square, or any other shape. For example, Fig. 1 shows a secondary battery 5 with a square structure as an example.

In some embodiments, referring to Fig. 2, the outer package may comprise a case 51 and a cover plate 53. Here, the case 51 can include a bottom plate and a side plate connected to the bottom plate, where the bottom plate and the side plate enclose to form an accommodating cavity. The case 51 has an opening that communicates with the accommodating cavity, and the cover plate 53 can cover the opening to close the accommodating cavity. The positive electrode plate, the negative electrode plate, and the separator may form an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art based on the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 are accommodated.

In some embodiments, the battery modules may be further assembled into a battery pack, the number of battery modules comprised in the battery pack may be one or more, and the specific number may be selected by those skilled in the art based on the application and capacity of the battery pack.

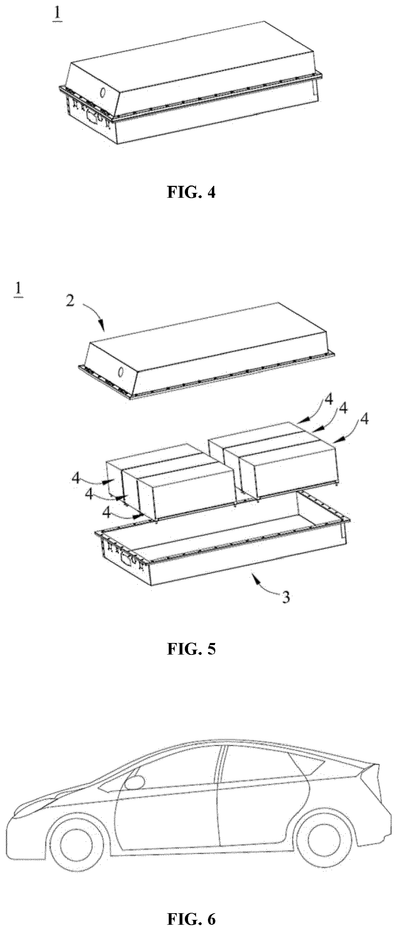

Fig. 4 and Fig. 5 are a battery pack 1 as an example. Referring to Fig. 4 and Fig. 5, the battery pack 1 may comprise a battery box and a plurality of battery modules 4 arranged in the battery box. The battery box comprises an upper box body 2 and a lower box body 3, where the upper box body 2 can cover the lower box body 3 and forms an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the electrical apparatus, the secondary battery, the battery module, or the battery pack may be selected according to its use requirements.

Fig. 6 is an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Embodiments

In order to make the to-be-solved technical problems, technical solutions, and beneficial effects of the present application clearer, the present application will be further described in detail below with reference to the Embodiments and the drawings. Apparently, the described Embodiments are merely some Embodiments, instead of all Embodiments, of the present application. The following description of at least one exemplary Embodiment is in fact merely illustrative, and does not serve as any limitation to the present application and its application. All other Embodiments obtained by those of ordinary skills in the art based on the Embodiments of the present application without making creative work are encompassed within the scope of protection of the present application.

Where no specific techniques or conditions are specified in the Embodiments, the techniques or conditions described in literatures of the art or the product specifications are prevailing. Where manufacturers are not specified, the employed reagents or instruments are commercially available conventional products.

### I. Preparation of a positive electrode active material

### Comparative Embodiment 1.1 Preparation of a monocationic positive electrode active material LiNi_{0.5}Co_{0.2}Mn_{0.3}O₂

A precursor of commercially available **Ni_{0.5}Co_{0.2}Mn_{0.3}(OH)₂** and lithium carbonate at a molar ratio of 1:1.07 were fully mixed, and the mixture was ground with an agate mortar, where excessive lithium carbonate was intended to make up for the loss of lithium in high-temperature calcination. The fully ground solid powder was transferred into a crucible, and calcinated in a temperature programmed muffle furnace. The calcination process was: heating from room temperature to 500 °C for pre-calcination for 5 h, then heating to a high temperature of 800 °C at a heating rate of 3 °C min⁻¹ respectively for calcination for 12 h, and then cooling to room temperature; to provide a material LiNi_{0.5}Co_{0.2}Mn_{0.3}O₂.

### Comparative Embodiment 1.2 Preparation of a positive electrode active material LiFePO₄ (lithium iron phosphate)

Lithium carbonate, ferric nitrate, and ammonium dihydrogen phosphate at a molar ratio of 1:1:1 were added into a nitric acid solution. The mixture was adjusted with a citric acid complexing agent to pH=3. A carbon source composed of glucose was added, where the mass of the carbon source accounted for 25% of the total mass of lithium carbonate, ferric nitrate, and ammonium dihydrogen phosphate. The mixture was fully mixed by stirring to obtain a mixed solution. An exothermic reaction occurred in the mixed solution, and then the mixed solution was evaporated to dryness to obtain a precursor. The precursor was vacuum dried at 150 °C for 12 h, and then ground by ball milling.

1 kg of the ball-milled precursor was heated in an atmosphere furnace to 500 °C at a rate of 2 °C/min for first calcination under a nitrogen atmosphere for 4 h, and then heated to 700 °C at a rate of 10 °C/min with insufflation of 200 mL of 80% by mass ethanol-water mixture gas for second calcination for 8 h. After natural cooling, a material product of **LiFePO₄** was collected.

### Embodiment 1.1 Preparation of a dicationic positive electrode active material Na_{0.003}Li_{0.997}Ni_{0.5}Co_{0.2}Mn_{0.3}O₂

A precursor of commercially available **Ni_{0.5}Co_{0.2}Mn_{0.3}(OH)₂,** lithium carbonate, and sodium carbonate at a molar ratio of 1:1.06679:0.0032 were fully mixed, and the mixture was ground, where excessive lithium carbonate was intended to make up for the loss of lithium in high-temperature calcination. The fully ground solid powder was transferred into a crucible, and calcinated in a temperature programmed muffle furnace. The calcination process was: heating from room temperature to 500 °C for pre-calcination for 5 h, then heating to a high temperature of 800 °C at a heating rate of 3 °C min⁻¹ respectively for calcination for 12 h, and then cooling to room temperature, to collect a material Na_{0.003}Li_{0.997}Ni_{0.5}Co_{0.2}Mn_{0.3}O₂.

### Embodiment 1.2 Dicationic positive electrode active material Na_{0.015}Li_{0.985}Ni_{0.5}Co_{0.2}Mn_{0.3}O₂

A precursor of commercially available **Ni_{0.5}Co_{0.2}Mn_{0.3}(OH)₂,** lithium carbonate, and sodium carbonate at a molar ratio of 1:1.054:0.016 were fully mixed, and the mixture was ground, where excessive lithium carbonate was intended to make up for the loss of lithium in high-temperature calcination. The fully ground solid powder was transferred into a crucible, and calcinated in a temperature programmed muffle furnace. The calcination process was: heating from room temperature to 500 °C for pre-calcination for 5 h, then heating to a high temperature of 800 °C at a heating rate of 3 °C min⁻¹ respectively for calcination for 12 h, and then cooling to room temperature, to collect a material Na_{0.0015}Li_{0.985}Ni_{0.5}Co_{0.2}Mn_{0.3}O₂.

### Embodiment 1.3 Preparation of a dicationic positive electrode active material Na_{0.025}Li_{0.975}Ni_{0.5}Co_{0.2}Mn_{0.3}O₂

A precursor of commercially available **Ni_{0.5}Co_{0.2}Mn_{0.3}(OH)₂,** lithium carbonate, and sodium carbonate at a molar ratio of 1:1.0432:0.0268 were fully mixed, and the mixture was ground, where excessive lithium carbonate was intended to make up for the loss of lithium in high-temperature calcination. The fully ground solid powder was transferred into a crucible, and calcinated in a temperature programmed muffle furnace. The calcination process was: heating from room temperature to 500 °C for pre-calcination for 5 h, then heating to a high temperature of 800 °C at a heating rate of 3 °C min⁻¹ respectively for calcination for 12 h, and then cooling to room temperature, to collect a material Na_{0.025}Li_{0.975}Ni_{0.5}Co_{0.2}Mn_{0.3}O₂.

### Embodiment 1.4 Preparation of a dicationic positive electrode active material Na_{0.03}Li_{0.97}Ni_{0.5}Co_{0.2}Mn_{0.3}O₂

A precursor of commercially available **Ni_{0.5}Co_{0.2}Mn_{0.3}(OH)₂,** lithium carbonate, and sodium carbonate at a molar ratio of 1:1.0379:0.0321 were fully mixed, and the mixture was ground, where excessive lithium carbonate was intended to make up for the loss of lithium in high-temperature calcination. The fully ground solid powder was transferred into a crucible, and calcinated in a temperature programmed muffle furnace. The calcination process was: heating from room temperature to 500 °C for pre-calcination for 5 h, then heating to a high temperature of 800 °C at a heating rate of 3 °C min⁻¹ respectively for calcination for 12 h, and then cooling to room temperature, to collect a material Na_{0.03}Li_{0.97}Ni_{0.5}Co_{0.2}Mn_{0.3}O₂.

### Embodiment 1.5 Preparation of a dicationic positive electrode active material Na_{0.05}Li_{0.95}Ni_{0.5}Co_{0.2}Mn_{0.3}O₂

A precursor of commercially available **Ni_{0.5}Co_{0.2}Mn_{0.3}(OH)₂,** lithium carbonate, and sodium carbonate at a molar ratio of 1:1.0165:0.0535 were fully mixed, and the mixture was ground, where excessive lithium carbonate was intended to make up for the loss of lithium in high-temperature calcination. The fully ground solid powder was transferred into a crucible, and calcinated in a temperature programmed muffle furnace. The calcination process was: heating from room temperature to 500 °C for pre-calcination for 5 h, then heating to a high temperature of 800 °C at a heating rate of 3 °C min⁻¹ respectively for calcination for 12 h, and then cooling to room temperature, to collect a material Na_{0.05}Li_{0.95}Ni_{0.5}Co_{0.2}Mn_{0.3}O₂.

### Embodiment 1.6 Positive electrode active material K_{0.003}Li_{0.997}Ni_{0.5}Co_{0.2}Mn_{0.3}O₂ with dications Li and K

A precursor of commercially available **Ni_{0.5}Co_{0.2}Mn_{0.3}(OH)₂,** lithium carbonate, and potassium carbonate at a molar ratio of 1:1.06679:0.0032 were fully mixed, and the mixture was ground, where excessive lithium carbonate was intended to make up for the loss of lithium in high-temperature calcination. The fully ground solid powder was transferred into a crucible, and calcinated in a temperature programmed muffle furnace. The calcination process was: heating from room temperature to 500 °C for pre-calcination for 5 h, then heating to a high temperature of 800 °C at a heating rate of 3 °C min⁻¹ respectively for calcination for 12 h, and then cooling to room temperature, to collect a material K_{0.003}Li_{0.997}Ni_{0.5}Co_{0.2}Mn_{0.3}O₂.

### Embodiment 1.7 Positive electrode active material Na_{0.0015}K_{0.0015}Li_{0.997}Ni_{0.5}Co_{0.2}Mn_{0.3}O₂ with trications K and Na

A precursor of commercially available **Ni_{0.5}Co_{0.2}Mn_{0.3}(OH)₂,** lithium carbonate, sodium carbonate, and potassium carbonate at a molar ratio of 1:1.06679:0.0016:0.0016 were fully mixed, and the mixture was ground, where excessive lithium carbonate was intended to make up for the loss of lithium in high-temperature calcination. The fully ground solid powder was transferred into a crucible, and calcinated in a temperature programmed muffle furnace. The calcination process was: heating from room temperature to 500 °C for pre-calcination for 5 h, then heating to a high temperature of 800 °C at a heating rate of 3 °C min⁻¹ **respectively for calcination for 12 h,** and then cooling to room temperature, to collect a **material Na_{0.0015}K_{0.0015}Li_{0.997}Ni_{0.5}Co_{0.2}Mn_{0.3}O₂.**

### Embodiment 1.8 Preparation of a dicationic positive electrode active material Na_{0.003}Li_{0.997}FePO₄ (sodium lithium iron phosphate)

Lithium carbonate, sodium carbonate, ferric nitrate, and ammonium dihydrogen phosphate at a molar ratio of 0.003:0.997:1:1 were added into a nitric acid solution. The mixture was adjusted with a citric acid complexing agent to pH=3. A carbon source composed of glucose was added, where the mass of the carbon source accounted for 25% of the total mass of lithium carbonate, ferric nitrate, and ammonium dihydrogen phosphate. The mixture was fully mixed by stirring to obtain a mixed solution. An exothermic reaction occurred in the mixed solution, and then the mixed solution was evaporated to dryness to obtain a precursor. The precursor was vacuum dried at 150 °C for 12 h, and then ground by ball milling.

1 kg of the ball-milled precursor was heated in an atmosphere furnace to 500 °C at a rate of 2 °C/min for first calcination under a nitrogen atmosphere for 4 h, and then heated to 700 °C at a rate of 10 °C/min with insufflation of 200 mL of 80% by mass ethanol-water mixture gas for second calcination for 8 h. After natural cooling, a material product of **Na_{0.003}Li_{0.997}FePO₄** was collected.

### Embodiment 1.9 Preparation of a dicationic positive electrode active material K_{0.0015}Na_{0.0015}Li_{0.997}FePO₄ (potassium sodium lithium iron phosphate)

Lithium carbonate, sodium carbonate, potassium carbonate, ferric nitrate, and ammonium dihydrogen phosphate at a molar ratio of 0.0015:0.015:0.997:1:1 were added into a nitric acid solution. The mixture was adjusted with a citric acid complexing agent to pH=3. A carbon source composed of glucose was added, where the mass of the carbon source accounted for 25% of the total mass of lithium carbonate, ferric nitrate, and ammonium dihydrogen phosphate. The mixture was fully mixed by stirring to obtain a mixed solution. An exothermic reaction occurred in the mixed solution, and then the mixed solution was evaporated to dryness to obtain a precursor. The precursor was vacuum dried at 150 °C for 12 h, and then ground by ball milling.

1 kg of the ball-milled precursor was heated in an atmosphere furnace to 500 °C at a rate of 2 °C/min for first calcination under a nitrogen atmosphere for 4 h, and then heated to 700 °C at a rate of 10 °C/min with insufflation of 200 mL of 80% by mass ethanol-water mixture gas for second calcination for 8 h. After natural cooling, a material product of **K_{0.0015}Na_{0.0015}Li_{0.997}FePO₄** was collected.

### II. Preparation of a secondary battery

### Embodiment 1

### 1. Preparation of a positive electrode plate

The positive electrode active material in Embodiment 1.1, a conductive agent acetylene black, and a binder PVDF at a weight ratio of 95:4:1 were mixed, and then a solvent N-methylpyrrolidone was added. The mixture was fully mixed by fully stirring to obtain a positive electrode slurry, which was then coated on both surfaces of a positive electrode current collector aluminum foil, where a coating weight on a positive electrode separator per unit area was 0.250 g/1540.25 mm² (based on the weight excluding the solvent), and was then oven-dried and cold pressed, to provide the positive electrode plate.

### 2. Preparation of an electrolyte solution

1M LiPF₆ was dissolved in a solution comprising EC:EMC:DMC=1:1:1.

### 3. Preparation of a negative electrode plate

The negative electrode active material artificial graphite, the conductive agent acetylene black, and the binder SBR+CMC at a weight ratio of 95:1.5:3.1:0.4 were mixed, and then a solvent deionized water was added. The mixture was sufficiently mixed by fully stirring to obtain a negative electrode slurry, which was then coated on both surfaces of a negative electrode current collector copper foil, where a coating weight on a negative electrode separator per unit area was 0.140 g/1540.25 mm² (based on the weight excluding the solvent), and was then oven-dried and cold pressed, to provide the negative electrode plate.

### 4. Preparation of a separator

A porous film of polyethylene was used as the separator.

### 5. Preparation of a secondary battery

The positive electrode plate, the separator, and the negative electrode plate were stacked in order, such that the separator was between the positive electrode and the negative electrode to serve for separation, and then winded to obtain a bare battery cell. The bare battery cell was placed in an outer package, the electrolyte solution was injected, the outer package was encapsulated to provide a secondary battery, and performance test was carried out.

The method for preparing the secondary batteries in Embodiments 2-11 and the secondary batteries in Comparative Embodiments 1-2 was similar to the method for preparing the secondary battery in Embodiment 1, except that the compositions of the positive electrode active material and the electrolyte solution of the battery were adjusted. Different product parameters are detailed in Table 1.

### II. Battery performance test

### Cycling performance test of the battery at 45 °C

At 45 °C, the lithium-ion battery was charged to 4.45 V at a constant current of 1C, then charged at a constant voltage of 4.45 V until the current was less than 0.05C, and then discharged to 2.8 V at a constant current of 1C, to obtain a first discharge capacity C0, which was denoted as a 1st cycle. The charging and discharging were repeated in this way, to compute the number of cycles when the discharge capacity of the lithium-ion battery attenuated to 80% of C0.

### III. Test results of Embodiments and Comparative Embodiments

The batteries in the Embodiments and the comparative Embodiments were prepared according to the above methods, and the performance parameters were determined. The results are shown in Table 1 below.

**Table 1 Battery Composition and Cycling Performance in Embodiments and Comparative Embodiments**

| Battery Embodiment No. | Positive electrode active material | Electrolyte solution composition | Cycling performan ce |
|---|---|---|---|
| Comparative Embodiment 1 | LiNi_{0.5}Co_{0.2}Mn_{0.3}O₂ | 1M LiPF₆ | 1500 cycles |
| Comparative Embodiment 2 | LiFePO₄ | 1M LiPF₆ | 3000 cycles |
| Embodiment 1 | Na_{0.003}Li_{0.997}Ni_{0.5}Co_{0.2}Mn_{0.3}O₂ | 1M LiPF₆ | 1700 cycles |
| Embodiment 2 | Na_{0.015}Li_{0.985}Ni_{0.5}Co_{0.2}Mn_{0.3}O₂ | 1M LiPF₆ | 2000 cycles |
| Embodiment 3 | Na_{0.025}Li_{0.975}Ni_{0.5}Co_{0.2}Mn_{0.3}O₂ | 1M LiPF₆ | 2500 cycles |
| Embodiment 4 | Na_{0.03}Li_{0.97}Ni_{0.5}Co_{0.2}Mn_{0.3}O₂ | 1M LiPF₆ | 1900 cycles |
| Embodiment 5 | Na_{0.05}Li_{0.95}Ni_{0.5}Co_{0.2}Mn_{0.3}O₂ | 1M LiPF₆ | 1800 cycles |
| Embodiment 6 | K_{0.003}Li_{0.997}Ni_{0.5}Co_{0.2}Mn_{0.3}O₂ | 1M LiPF₆ | 1850 cycles |
| Embodiment 7 | K_{0.0015}Na_{0.0015}Li_{0.997}Ni_{0.5}Co_{0.2}Mn₀. ₃O₂ | 1M LiPF₆ | 1950 cycles |
| Embodiment 8 | Na_{0.003}Li_{0.997}Ni_{0.5}Co_{0.2}Mn_{0.3}O₂ | 0.95M LiPF₆ +0.05M NaPF₆ | 2500 cycles |
| Embodiment 9 | Na_{0.003}Li_{0.997}Ni_{0.5}Co_{0.2}Mn_{0.3}O₂ | 0.95M LiPF₆ +0.1M NaPF₆ | 2550 cycles |
| Embodiment 10 | Na_{0.003}Li_{0.997}FePO₄ | 1M LiPF₆ | 4000 cycles |
| Embodiment 11 | K_{0.0015}Na_{0.0015}Li_{0.997}FePO₄ | 1M LiPF₆ | 4500 cycles |
| Embodiment 12 | Na_{0.003}Li_{0.997}Ni_{0.5}Co_{0.2}Mn_{0.3}O₂ | 0.95M LiClO₄ +0.05M NaClO₄ | 2450 cycles |

When sodium ions and potassium ions are doped into the positive electrode active material of the lithium-ion battery, the cycling performance of the battery cell is improved; with the increase of the doping amount, the cycling performance of the battery first increases and then decreases; and the optimal doping amount of sodium is 0.025. The doping of sodium ions and potassium ions improves the structural stability of the positive electrode active material, thus improving the cycling performance of the battery.

As can be seen from the comparison between Embodiments 1, 8, and 9 and Comparative Embodiment 1, the positive electrode active material comprising sodium ions, in combination with the electrolyte solution with the addition of a sodium salt, can significantly improve the cycling performance of the secondary battery. After the sodium salt was added into the electrolyte solution, sodium ions in the positive electrode active material can be intercalated into the graphite layer through the electrolyte solution, to play a supporting role, and reduce the expansion/contraction caused by the intercalation/deintercalation of lithium ions, thereby reducing the SEI damage, reducing the loss of active lithium, and improving the cycling performance of the battery.

As can be seen from the comparison between Embodiments 8 and 12 and Comparative Embodiment 1, different electrolyte salts can greatly improve the cycling performance of the battery.

To sum up, an ion with a larger radius is doped into the positive electrode active material, in combination with an electrolyte solution of a salt of the ion, thereby contributing to greatly improving the cycling performance of the battery. On the one hand, the ion with the larger radius is doped to play a role in stabilizing the layered structure of the cathode, and reduce the material loss. On the other hand, the ion with the larger radius is intercalated into a graphite material through the electrolyte solution comprising the salt of the ion, to support the layered structure of graphite, reduce the loss of active lithium, and improve the cycling performance of the battery.

It should be noted that the present application is not limited to the above embodiments. The above embodiments are merely exemplary, and embodiments having substantially same technical concept and same effects within the scope of the technical solutions of the present application are all encompassed within the technical scope of the present application. In addition, without departing from the scope of the subject matter of the present application, various modifications that can be conceived of by those skilled in the art are applied to the embodiments, and other modes constructed by combining some of the constituent elements of the embodiments are also encompassed within the scope of the present application.

## Claims

1. A secondary battery, comprising (1) a positive electrode plate that comprises a positive electrode current collector and a positive electrode film layer arranged on at least one surface of the positive electrode current collector and comprising a positive electrode active material; and (2) an electrolyte solution; wherein the positive electrode active material is an active material having a chemical formula below with dications A and B
AₓB₁₋ₓMeO₂ or AₓB₁₋ₓMPO₄,
where
Me is selected from one or more of elements Mn, Fe, Ni, Co, V, Cu, or Cr;
M is selected from one or more of Mn, Fe, Ni, or Co;
A is K or Na,
B is Na or Li;
where an ionic radius of A is larger than that of B, and A and B are of different classes;
x is from 0.001 to 0.05; and
the electrolyte solution comprises an electrolyte salt of the dications A and B, where A and B are as defined in the positive electrode active material.

2. The secondary battery according to claim 1, wherein a molar concentration ratio of the two cations in the electrolyte solution is greater than or equal to a stoichiometric ratio of the two cations in the positive electrode active material.

3. The secondary battery according to claim 1 or 2, wherein the electrolyte salt of the dications is selected from at least one of an inorganic salt and an organic salt of two or more elements of lithium, sodium, and potassium, where the inorganic salt is selected from at least one of hexafluorophosphate, perchlorate, hexafluoroarsenate, tetrafluoroborate, or difluorophosphate; and the organic salt is selected from at least one of bis(oxalate)borate salt, difluoro(oxalato)borate salt, bis(fluorosulfonyl)imide salt, or bis(trifluoromethanesulfonyl)imide salt.

4. The secondary battery according to any one of claims 1-3, wherein the positive electrode active material having the chemical formula of AₓB₁₋ₓMeO₂ is selected from at least one of an active material having a chemical formula of AₓB₁₋ₓNiO₂, AₓB₁₋ₓMnO₂, AₓB₁₋ₓCoO₂, AₓB₁₋ₓNi_{y}Co_{z}Mn_{1-y-z}O₂, or AₓB₁₋ₓNi_{y}Co_{z}Al_{1-y-z}O₂, and a cladded product and a doped product thereof; where the A, B, and x are as defined in claim 1; 0≤z≤1, and 0≤y≤1.

5. The secondary battery according to any one of claims 1-4, wherein the positive electrode active material having the chemical formula of AₓB₁₋ₓMPO₄ is selected from at least one active material having a chemical formula of AₓB₁₋ₓFePO₄ or AₓB₁₋ₓCoPO₄; where the A, B, and x are as defined in claim 1.

6. A method for preparing a positive electrode active material for the secondary battery according to any one of claims 1-5, comprising steps of:
1) providing a precursor of a transition metal Me or M; and
2) fully mixing the precursor with a salt of a metal A or a salt of a metal B, grinding the mixture; then calcinating the ground powder, and then cooling to room temperature to obtain the positive electrode active material;
wherein the Me or M, A, and B are as defined in any one of claims 1-5.

7. The method according to claim 6, wherein the salt of the metal A or the salt of the metal B is at least one of carbonate or hydroxide.

8. The method according to claim 6 or 7, wherein a molar ratio of the precursor to the salt of the metal A or the salt of the metal B is 105%-109% of stoichiometric ratio thereof.

9. A battery module, comprising the secondary battery according to any one of claims 1-5.

10. A battery pack, comprising the battery module according to claim 9.

11. An electrical apparatus, comprising at least one of the secondary battery according to any one of claims 1-5, the battery module according to claim 9, or the battery pack according to claim 10.
